# EUROPEAN PATENT APPLICATION

(11) **EP 3 544 245 A1**
(43) Date of publication of application: **25.09.2019**
(21) Application number: 17872405.0
(22) Date of filing: 17.11.2017
(51) Int. Cl.: H04L 12/751

(54) **FORWARDING PATH CONTROL METHOD AND APPARATUS, AND CONTROL DEVICE**

(30) Priority: 17.11.2016 CN 201611009363
(71) Applicant: ZTE Corporation, Shenzhen, Guangdong 518057 (CN)
(72) Inventor: LEI, Hua, Shenzhen Guangdong 518057 (CN); GAO, Fan, Shenzhen Guangdong 518057 (CN); LIU, Huayong, Shenzhen Guangdong 518057 (CN); WANG, Xu, Shenzhen Guangdong 518057 (CN)
(74) Representative: Regimbeau
(86) International application number: PCT/CN2017/111571
(87) International publication number: WO 2018/090965

(57) **Abstract**

A forwarding path control method comprises: a control device determining, according to network topology information in a management domain of the control device and path computation constraint information about a service, available forwarding paths of the service in the management domain, wherein the available forwarding paths are paths formed by forwarding devices forwarding the service in the management domain; the control device selecting, according to a scheduling policy, a primary forwarding path and a secondary forwarding path from the available forwarding paths; and the control device performing, according to the primary forwarding path and the secondary forwarding path, routing policy configuration on the forwarding devices in the management domain.

## Description

### TECHNICAL FIELD

The present disclosure relates to the field of data networks and communication technologies, for example, a forwarding path control method and apparatus, and a control device.

### BACKGROUND

With the development of communication networks, the scale of a network is getting larger and larger, the number of devices in a network is increasing, such that a network structure and service deployment become more and more complex, and network management becomes more and more difficult. It is risky to manually perform multiple policy configuration and modify configuration on a network forwarding device such as a router. A network often fails due to configuration errors.

Before the Software Defined Network (abbreviated as SDN) technology emerges, partial policy control can be implemented when a Border Gateway Protocol (abbreviated as BGP) routing policy is configured on a router. However, to support new policies developed subsequently, it is needed to undergo a lengthy process such as equipment upgrade. Policy configuration for multiple routers cannot ensure consistency of multiple configurations. Generally, explicit network configuration is determined first, and the network configuration is manually decomposed into the configuration of each router. Each router is configured such that the each router can verify a new policy. In the absence of network-wide verification, due to complex service operations, risks may occur even if the BGP routing policy of merely one router is modified, and one policy configuration error may cause a failure of the entire network.

### SUMMARY

A method and apparatus for controlling a forwarding path, and a control device can control the forwarding path of traffic flexibly and schedule service traffic according to a policy.

A method for controlling a forwarding path includes:
determining, by a control device, available forwarding paths in a management domain for a service in the management domain of the control device according to network topology information and path computation constraint information of the service in the management domain, where each of the available forwarding paths is formed by forwarding devices for forwarding the service in the management domain;
selecting, by the control device, a primary forwarding path and a standby forwarding path from the available forwarding paths according to a scheduling policy; and
configuring, by the control device, a routing policy for the forwarding devices in the management domain according to the primary forwarding path and the standby forwarding path.
Optionally, before determining, by the control device, the available forwarding paths of the service in the management domain, the method further includes:
collecting, by the control device, the network topology information in the management domain of the control device by using a Border Gateway Protocol with Link State, which is abbreviated BGP-LS, where the path computation constraint information of the service includes at least one of: a bandwidth of the service, a delay of the service, forwarding devices through which the service has to pass, and forwarding devices excluded by the service.

Optionally, the method further includes: receiving, by the control device, the scheduling policy configured on an orchestrator through a northbound interface of the control device.

Optionally, selecting, by the control device, the primary forwarding path and the standby forwarding path from the available forwarding paths according to the scheduling policy includes one of the following:
determining the primary forwarding path and the standby forwarding path according to an Interior Gateway Protocol cost. which is abbreviated as IGP cost, of a plurality of the available forwarding paths of the service in the management domain;
determining the primary forwarding path and the standby forwarding path according to a delay of the plurality of the available forwarding paths of the service in the management domain; and
in condition that more than two of the available forwarding paths satisfy a delay requirement of the service in the management domain, determining the primary forwarding path and the standby forwarding path according to an IGP cost of the more than two of the available forwarding paths.

Optionally, the method further includes: switching the primary forwarding path to the standby forwarding path when traffic of any forwarding device in the primary forwarding path exceeds a set traffic threshold.

Optionally, the method further includes: perceiving, by the control device, a change of the network topology information in the management domain of the control device by using the BGP-LS, and updating, by the control device, the network topology information when the network topology information changes; and

the determining, by the control device, the available forwarding paths of the service in the management domain of the control device according to the network topology information and the path computation constraint information of the service in the management domain includes: redetermining the available forwarding paths of the service in the management domain according to the path computation constraint information and the updated network topology information.

Optionally, configuring, by the control device, the routing policy for the forwarding devices in the management domain according to the primary forwarding path and the standby forwarding path includes:

configuring, by the control device, a local attribute of forwarding devices in the primary forwarding path and a local attribute of forwarding devices in the standby forwarding path.

An apparatus for controlling a forwarding path includes:
a path computation module, which is configured to determine available forwarding paths in a management domain for a service in the management domain of the control device according to network topology information and path computation constraint information of the service in the management domain, where each of the available forwarding paths is formed by forwarding devices for forwarding the service in the management domain;
a policy scheduling module, which is configured to select a primary forwarding path and a standby forwarding path from the available forwarding paths according to a scheduling policy; and
a configuration delivery module, which is configured to configure a routing policy for the forwarding devices in the management domain according to the primary forwarding path and the standby forwarding path.

Optionally, the apparatus further includes:
a topology management module, which is configured to collect the network topology information in the management domain of the control device by using a Border Gateway Protocol with Link State , which is abbreviated as BGP-LS, before the path computation module determines the available forwarding paths of the service in the management domain, where
the path computation constraint information of the service includes at least one of: a bandwidth of the service, a delay of the service, forwarding devices through which the service has to pass, and forwarding devices excluded by the service.

Optionally, the policy scheduling module is further configured to receive the scheduling policy configured on an orchestrator through a northbound interface of the control device.

Optionally, the policy scheduling module is further configured to select the primary forwarding path and the standby forwarding path from the available forwarding paths in one of the following manners:
determining the primary forwarding path and the standby forwarding path according to an IGP cost of a plurality of the available forwarding paths of the service in the management domain;
determining the primary forwarding path and the standby forwarding path according to a delay of the plurality of the available forwarding paths of the service in the management domain; and
in condition that more than two of the available forwarding paths satisfy a delay requirement of the service in the management domain, determining the primary forwarding path and the standby forwarding path according to an IGP cost of the more than two of the available forwarding paths.

Optionally, the scheduling policy further includes: switching the primary forwarding path to the standby forwarding path when traffic of any forwarding device in the primary forwarding path exceeds a set traffic threshold.

Optionally, the topology management module is further configured to perceive a change of the network topology information in the management domain of the control device by using the BGP-LS, and to update the network topology information when the network topology information changes; and
the path computation module is further configured to redetermine the available forwarding paths of the service in the management domain according to the path computation constraint information and the updated network topology information.

Optionally, the configuration delivery module is further configured to:
configure a local attribute of forwarding devices in the primary forwarding path and a local attribute of forwarding devices in the standby forwarding path.

A control device includes a processor and a memory storing instructions executable by the processor, where the processor is configure to, when executing the instructions, implement the following operations:
determining available forwarding paths in a management domain for a service in the management domain of the control device according to network topology information and path computation constraint information of the service in the management domain, where each of the available forwarding paths is formed by forwarding devices for forwarding the service in the management domain;
selecting a primary forwarding path and a standby forwarding path from the available forwarding paths according to a scheduling policy; and
configuring a routing policy for the forwarding devices in the management domain according to the primary forwarding path and the standby forwarding path.

Optionally, the processor is further configured to implement the following operation: receiving the scheduling policy configured on an orchestrator through a northbound interface of the control device.

Optionally, the scheduling policy includes one of the following:
determining the primary forwarding path and the standby forwarding path according to an IGP cost of a plurality of the available forwarding paths of the service in the management domain;
determining the primary forwarding path and the standby forwarding path according to a delay of the plurality of the available forwarding paths of the service in the management domain; and
in condition that more than two of the available forwarding paths satisfy a delay requirement of the service in the management domain, determining the primary forwarding path and the standby forwarding path according to an IGP cost of the more than two of the available forwarding paths; and
the scheduling policy further includes: switching the primary forwarding path to the standby forwarding path when traffic of any forwarding device in the primary forwarding path exceeds a set traffic threshold.

Optionally, configuring the routing policy for the forwarding devices in the management domain according to the primary forwarding path and the standby forwarding path includes:
configuring a local attribute of forwarding devices in the primary forwarding path and a local attribute of forwarding devices in the standby forwarding path.

A computer-readable storage medium is configured to store computer-executable instructions for executing the preceding method.

A control device includes:
at least one processor; and
a memory that is communicatively connected to the at least one memory.

The memory stores instructions executable by the at least one processor, and the at least one processor executes the instructions to execute the preceding method.

### BRIEF DESCRIPTION OF DRAWINGS

FIG. 1 is a flowchart illustrating a method for controlling a forwarding path according to an embodiment;
FIG. 2 is a flowchart illustrating a method for controlling a forwarding path according to another embodiment;
FIG. 3 is a structure diagram of an apparatus for controlling a forwarding path according to an embodiment;
FIG. 4 is a network diagram of an operator network in an SDN architecture according to an embodiment;
FIG. 5 is a flowchart illustrating traffic scheduling according to an embodiment;
FIG. 6 is a flowchart illustrating traffic scheduling according to another embodiment;

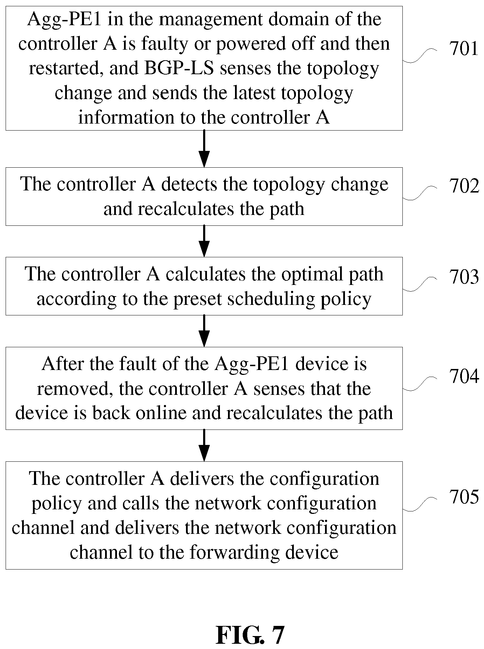

FIG. 7 is a flowchart illustrating traffic scheduling according to another embodiment;
FIG. 8 is a structure diagram of a traffic scheduling system according to an embodiment;
FIG. 9 is a flowchart illustrating traffic scheduling according to another embodiment; and
FIG. 10 is a structure diagram of hardware of a control device according to an embodiment.

### DETAILED DESCRIPTION

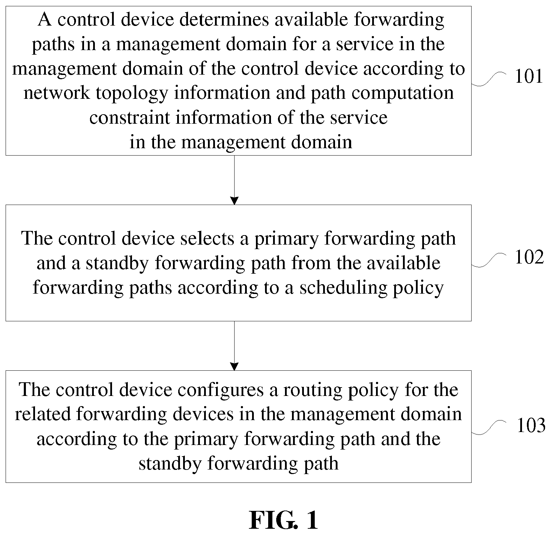

An embodiment provides a method for controlling a forwarding path. As shown in FIG. 1, the method includes a step 101, a step 102 and a step 103.

In step 101, a control device determines available forwarding paths in a management domain for a service in the management domain of the control device according to network topology information and path computation constraint information of the service in the management domain, where each of the available forwarding paths is formed by forwarding devices for forwarding the service in the management domain.

The network topology information may include a connection relationship between the forwarding devices.

Optionally, the network topology information in the management domain of the control device is acquired in the manner described below.

The control device collects the network topology information in the management domain of the control device by using a Border Gateway Protocol with Link State, which is abbreviated as BGP-LS.

The path computation constraint information refers to a constraint used when the forwarding path is calculated. The path computation constraint information of the service includes at least one of: a bandwidth of the service, a delay of the service, forwarding devices through which the service has to pass, and forwarding devices excluded by the service (that is, forwarding devices that are not included in the forwarding path of the service).

In step 101, on the basis of the acquired network topology information and path computation constraint information of the service, the available forwarding paths of the service in the management domain are calculated by using the Constrained Shortest Path First (CSPF) algorithm or the K Shortest Paths (KSP) algorithm.

In step 102, the control device selects a primary forwarding path and a standby forwarding path from the available forwarding paths according to a scheduling policy.

Optionally, the scheduling policy includes one of the following:
determining the primary forwarding path and the standby forwarding path according to an Interior Gateway Protocol cost, which is abbreviated as IGP cost, of a plurality of the available forwarding paths of the service in the management domain. For example, the control device arranges the available forwarding paths in ascending order of IGP cost, determines an available forwarding path having the lowest IGP cost as the primary forwarding path, and determines other available forwarding paths as standby forwarding paths, and a forwarding device selects a standby forwarding path for active/standby switchover from the standby forwarding paths according to its own path scheduling policy;
determining the primary forwarding path and the standby forwarding path according to a delay of the plurality of the available forwarding paths of the service in the management domain. For example, the control device arranges the available forwarding paths in ascending order of delay, determines an available forwarding path having the lowest delay as the primary forwarding path, and determines other available forwarding paths as standby forwarding paths, and a forwarding device selects a standby forwarding path for active/standby switchover from the standby forwarding paths according to its own path scheduling policy; and
in condition that more than two of the available forwarding paths satisfy a delay requirement of the service in the management domain, determining the primary forwarding path and the standby forwarding path according to an IGP cost of the more than two of the available forwarding paths. For example, the control device determines whether the available forwarding paths satisfy the requirement, and in condition that more than two of the available forwarding paths satisfy the requirement for a delay required by the service in the management domain, then the control device determines an available forwarding path having the lowest IGP cost as the primary forwarding path and determines other available forwarding paths as standby forwarding paths.

In step 103, the control device configures a routing policy for the related forwarding devices in the management domain according to the primary forwarding path and the standby forwarding path.

Optionally, after the primary forwarding path and the standby forwarding path are determined, the related forwarding devices are configured in multiple manners. For example, the value of the local attribute, e.g. local reference, to which the same route delivered by multiple neighbors belongs in the BGP attribute of the forwarding devices in the management domain may be modified, or the routing attribute, e.g. local reference, of the forwarding devices in the management domain may be modified.

In the preceding embodiment, the complex and variable policy calculation is concentrated in a controller, an underlying distributed control network from the control device to each forwarding device is retained, multiple protocols and IP forwarding engineering for the network are compatible, and the network can be controlled even if the software of the forwarding device is not upgraded.

Optionally, the method further includes that the control device perceives a change of the network topology information of the management domain in the control device by using the BGP-LS, and updates the network topology information when the network topology information changes; redetermines the available forwarding paths of the service in the management domain according to the path computation constraint information and the updated network topology information of the service in the management domain; and timely updates the active and standby forwarding paths and configures the forwarding devices.

The change of the network topology information arises from at least one of: a failure of a link, a failure of a forwarding device, powering on of a forwarding device, adding of a forwarding device, and deletion of a forwarding device.

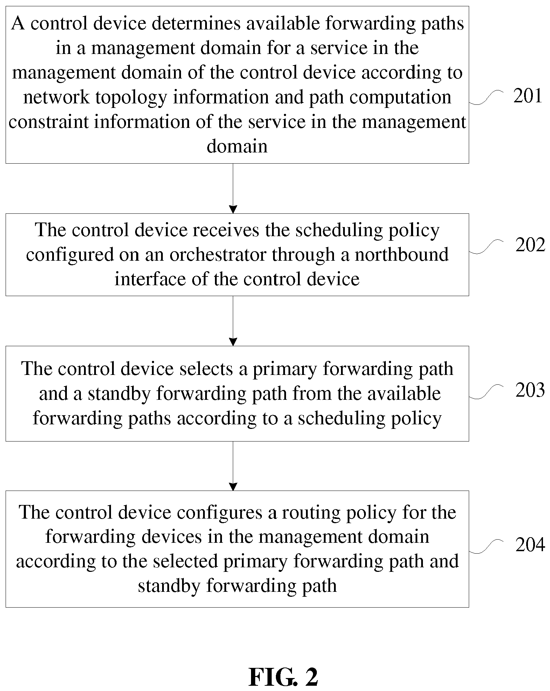

On the basis of the preceding embodiment, an embodiment provides a method for controlling a forwarding path. As shown in FIG. 2, the method includes a step 201, a step 202, a step 203 and a step 204.

In step 201, a control device determines available forwarding paths in a management domain for a service in a management domain of the control device according to network topology information and path computation constraint information of the service in the management domain.

In step 202, the control device receives the scheduling policy configured on an orchestrator through a northbound interface of the control device.

Optionally, the scheduling policy includes one of the following:
determining a primary forwarding path and a standby forwarding path according to an Interior Gateway Protocol cost, which is abbreviated as IGP cost, of a plurality of the available forwarding paths of the service in the management domain;
determining the primary forwarding path and the standby forwarding path according to a delay of the plurality of the available forwarding paths of the service in the management domain; and
in condition that more than two of available forwarding paths satisfy a delay requirement of the service in the management domain, determining the primary forwarding path and the standby forwarding path according to an IGP cost of the more than two of the available forwarding paths.

Since the scheduling policy used by the control device may be configured according to multiple service types and network topology conditions, the scheduling policy may be flexibly orchestrated by the orchestrator in addition to the preceding three types.

In step 203, the control device selects a primary forwarding path and a standby forwarding path from the available forwarding paths according to a scheduling policy.

In step 204, the control device configures a routing policy for the forwarding devices in the management domain according to the selected primary forwarding path and standby forwarding path.

In this embodiment, the control device can receive the scheduling policy configured by the operator user orchestrator and can automatically perform the analysis and calculation desired by the operator user and deliver the information to the forwarding devices, thereby reducing the risk of software upgrading and configuration of multiple forwarding devices one by one and satisfying the operator user's various requirements for flexible adjustment.

An embodiment provides a method for controlling a forwarding path. On the basis of the embodiment of FIG. 2, in the method of this embodiment, in addition to how to determine the primary forwarding path and the standby forwarding path, the scheduling policy further includes switching the primary forwarding path with the standby forwarding path when the traffic of any forwarding device in the primary forwarding path exceeds the set traffic threshold.

In this embodiment, the network is managed by using the control device, so that the control plane and the forwarding plane can be separated from each other. When the traffic is heavy in some forwarding paths observed by the operator network maintenance personnel and light in other forwarding paths observed by the operator network maintenance personnel, the traffic is desired to be balanced such that all paths can cope with sudden traffic impacts. Also, some operators hope to provide high-quality services for other enterprises that use the network services of these operators so that the network traffic of these enterprises preferentially passes through paths that have good-quality services. The control device of this embodiment can satisfy the requirements of the operator network maintenance personnel, adjust the forwarding paths of the network traffic, and flexibly schedule the service traffic. In this embodiment, the path scheduling policy for an IP network can be configured and orchestrated flexibly.

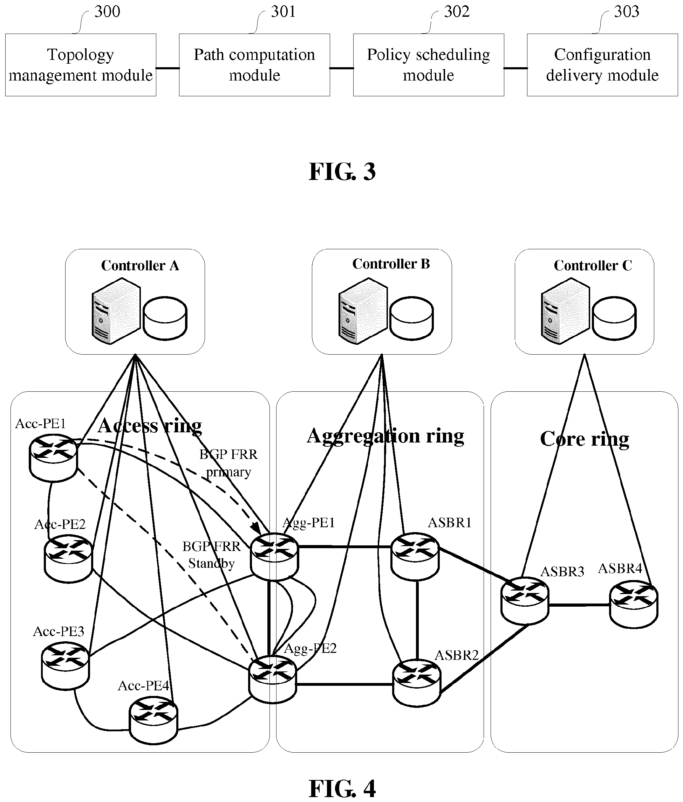

An embodiment provides an apparatus for controlling a forwarding path corresponding to the method embodiment of FIG. 1. As shown in FIG. 3A, the apparatus includes a path computation module 301, a policy scheduling module 302 and a configuration delivery module 303.

The path computation module 301 is configured to determine available forwarding paths in a management domain for a service in a management domain of the control device according to network topology information and path computation constraint information of the service in the management domain, where each of the available forwarding paths is formed by forwarding devices for forwarding the service in the management domain.

The policy scheduling module 302 is configured to select a primary forwarding path and a standby forwarding path from the available forwarding paths according to a scheduling policy.

Optionally, the scheduling policy includes one of the following:
determining a primary forwarding path and a standby forwarding path according to an IGP cost of a plurality of the available forwarding paths of the service in the management domain;
determining the primary forwarding path and the standby forwarding path according to a delay of the plurality of the available forwarding paths of the service in the management domain; and
in condition that more than two of the available forwarding paths satisfy a delay requirement of the service in the management domain, determining the primary forwarding path and the standby forwarding path according to an IGP cost of the more than two of the available forwarding paths.

The configuration delivery module 303 is configured to configure a routing policy for the related forwarding devices in the management domain according to the selected primary forwarding path and standby forwarding path.

Optionally, the apparatus further includes a topology management module 300.

The topology management module 300 is configured to collect the network topology information in the management domain of the control device by using a BGP-LS.

The path computation constraint information of the service may include at least one of: a bandwidth of the service, a delay of the service, forwarding devices through which the service has to pass, and forwarding devices excluded by the service.

In the apparatus of this embodiment, the complex and variable policy calculation is concentrated in a controller, an underlying distributed control network from the control device to each forwarding device is retained, multiple protocols and IP forwarding engineering for the network are compatible, and the network can be controlled even if the software of the forwarding device is not upgraded.

Optionally, the topology management module 300 is further configured to perceive a change of the network topology information in the management domain of the control device by using the BGP-LS, and to update the network topology information after the network topology information changes.

Optionally, the path computation module 301 is further configured to redetermine the available forwarding paths of the service in the management domain according to the path computation constraint information and the updated network topology information of the service in the management domain.

An embodiment provides an apparatus for controlling a forwarding path. On the basis of the preceding embodiment, in the apparatus provided in this embodiment, the policy scheduling module 302 is further configured to receive the scheduling policy configured on an orchestrator through a northbound interface of the control device.

Since the scheduling policy used by the control device may be configured according to multiple service types and network topology conditions, the scheduling policy may be flexibly orchestrated by the orchestrator.

In this embodiment, the control device can receive the scheduling policy configured by the operator user orchestrator and can automatically perform the analysis and calculation desired by the operator user and deliver the information to the forwarding devices, thereby reducing the risk of software upgrading and configuration of multiple forwarding devices one by one and satisfying the operator user's various requirements for flexible adjustment.

An embodiment provides an apparatus for controlling a forwarding path. On the basis of the preceding embodiment, in this embodiment, in addition to how to determine the primary forwarding path and the standby forwarding path, the scheduling policy further includes switching the primary forwarding path with the standby forwarding path when the traffic of any forwarding device in the primary forwarding path exceeds the set traffic threshold.

In this embodiment, the network is managed by using the control device, so that the control plane and the forwarding plane can be separated from each other. When the traffic is heavy in some forwarding paths observed by the operator network maintenance personnel and light in other forwarding paths observed by the operator network maintenance personnel, the traffic is desired to be balanced such that all paths can cope with sudden traffic impacts. Also, some operators hope to provide high-quality services for other enterprises that use the network services of these operators so that the network traffic of these enterprises preferentially passes through paths that have good-quality services. The control device of this embodiment can satisfy the requirements of the operator network maintenance personnel, adjust the forwarding paths of the network traffic, and flexibly schedule the service traffic. In this embodiment, the path scheduling policy for an IP network can be configured and orchestrated flexibly.

An embodiment provides a control device. As shown in FIG. 3B, the control device includes a processor 310 and a memory 320 storing instructions executable by the processor 310, where the processor 310 is configure to, when executing the instructions, implement the following operations:
determining available forwarding paths in a management domain for a service in the management domain of the control device according to network topology information and path computation constraint information of the service in the management domain;
selecting a primary forwarding path and a standby forwarding path from the available forwarding paths according to a scheduling policy; and
configuring a routing policy for the related forwarding devices in the management domain according to the primary forwarding path and the standby forwarding path.

Optionally, the processor is further configured to implement the following operation: receiving the scheduling policy set on an orchestrator through a northbound interface of the control device.

The scheduling policy includes one of the following:
determining a primary forwarding path and a standby forwarding path according to an IGP cost of a plurality of the available forwarding paths of the service in the management domain;
determining the primary forwarding path and the standby forwarding path according to a delay of the plurality of the available forwarding paths of the service in the management domain; and
in condition that more than two of the available forwarding paths satisfy a delay requirement of the service in the management domain, determining the primary forwarding path and the standby forwarding path according to an IGP cost of the more than two of the available forwarding paths.

Optionally, the scheduling policy further includes: switching the primary forwarding path with the standby forwarding path when traffic of any forwarding device in the primary forwarding path exceeds a set traffic threshold.

In an embodiment, on the basis of the preceding embodiments, the preceding solutions are applied to SDN. Application examples are described in conjunction with FIGS. 4 to 6.

Through the SDN transformation of the operator network, the risk of upgrading and configuration modification by the operator can be reduced and the difficulty of manually deploying a policy for the entire network can be reduced. The SDN controller adjusts the forwarding path of network traffic, so that the service traffic can be flexibly scheduled, the complexity of network management and maintenance and service deployment can be reduced, the flexibility in service deployment can be improved, and the rapid deployment of services can be implemented.

With the control device provided in the preceding embodiments, as long as an operator user delivers the user's requirements to the control device, the controller can receive the scheduling policy configured by the operator user orchestrator and can automatically perform the analysis and calculation desired by the operator user and deliver the information to the forwarding devices, thereby reducing the risk of software upgrading and configuration of multiple forwarding devices one by one and satisfying the operator user's various requirements for flexible adjustment.

The network is managed by using the control device, so that the control plane and the forwarding plane can be separated from each other. When the traffic is heavy in some forwarding paths observed by the operator network maintenance personnel and light in other forwarding paths observed by the operator network maintenance personnel, the traffic is desired to be balanced such that all paths can cope with sudden traffic impacts. Also, some operators hope to provide high-quality services for other enterprises that use the network services of these operators so that the network traffic of these enterprises preferentially passes through paths that have good-quality services. In this embodiment, the path scheduling policy for an IP network can be configured and orchestrated flexibly.

### Application example one

In an application example, in conjunction with FIG. 4, an SDN controller (for example, the control device provided in the preceding embodiments) is used to deploy a seamless Multi-protocol Label Switching network, which is abbreviated as MPLS network, to implement topology collection, path computation, policy scheduling and BGP configuration delivery, to make an access ring Acc-PE1 device connected to a core ring N-PE3 device and to schedule traffic according to a policy change. In this application example, devices in an access ring, a core ring and an aggregation ring are all forwarding devices. Each forwarding device is scheduled and controlled by the forwarding path of the SDN controller of the management domain in which the forwarding device is located. The controller A, the controller B and the controller C are all SDN controllers.

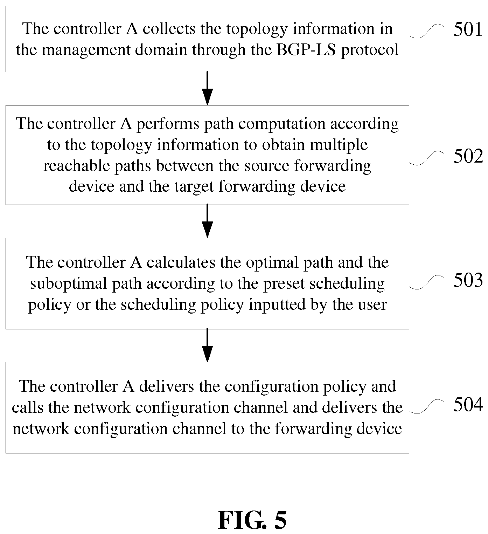

The basic network configuration may include that an IP address for interconnection between networks is planned and configured for each forwarding device and each interface of each forwarding device, connections between multiple forwarding devices are correct, and IGP routes in multiple management domains are opened. Then, a step 501 and a step 502 are performed according to traffic scheduling shown in FIG. 5.

In step 501, the controller A collects topology information in the management domain of the controller A through BGP-LS that is enabled between the controller A and the forwarding devices managed by the controller A.

In step 502, in the seamless MPLS network, the controller A delivers active/standby Border Gateway Protocol Label Unicast, which is abbreviated as BGP LU, to control service routing and thus to balance between services of the entire network.

When configuring a service, the controller A controls active and standby links of Border Gateway Protocol Fast Re-Route, which is abbreviated as BGP FRR, to make each forwarding device have a different Label Switching Path, which is abbreviated as LSP, and thus to achieve a traffic balance.

As shown in FIG. 4, two forwarding devices, namely Agg-PE1 and Agg-PE2, are deployed at the domain border in the management domain of the A controller. The controller A calculates the reachable paths (namely the available forwarding paths in the preceding embodiments) from the Acc-PE1 device at the service origin to the forwarding devices Agg-PE1 and Agg-PE2 at the domain border according to topology information collected by the controller A and path computation constraint information (at least one of: a bandwidth of the service, a delay of the service and node included or excluded by the service.) carried at the time of service creation.

Assuming that the traffic engineering (TE) metric value of each link is 1, then the value of the lowest IGP cost from Acc-PE1 to Agg-PE1 in the domain is 1 (because the total TE of this path is 1), and the value of the lowest IGP cost from Acc-PE1 to Agg-PE2 in the domain is 2 (because the total TE of this path is 2).

In step 503, the controller A analyzes multiple reachable paths according to a policy preset by the controller A or a policy inputted by a user through the northbound interface to select an optimal path and a suboptimal path.

The scheduling policy preset by the controller A is that among the paths through which BGP-LSPs pass, the BGP-LSP path with the lowest IGP cost is optimal, so that network traffic is balanced at the node level. Each of Agg-PE1 and Agg-PE2 establishes a BGP neighbor relation with Acc-PE1. A route delivered by N-PE3 in the management domain of the controller C passes through the aggregation ring and then enters Agg-PE1 and Agg-PE2 in the access ring. Acc-PE1 can receive the same route from different BGP neighbors Agg-PE1 and Agg-PE2. According to the scheduling policy preset by the controller A, the path with the lowest IGP cost in the domain is an optimal path, the value of the lowest IGP cost from Acc-PE1 to Agg-PE1 in the domain is 1, and the value of the lowest IGP cost from Acc-PE1 to Agg-PE2 in the domain is 2. Therefore, after calculation by the controller A according to the policy, the controller A obtains that the active path of BGP LSP in the management domain is from Acc-PE1 to Agg-PE1 and that the standby path of BGP LSP in the management domain is from Acc-PE1 to Agg-PE2.

In step 504, the controller A configures a routing policy for the Acc-PE1 device and modifies the local attribute, e.g. local preference, of the same route delivered by different neighbors in the BGP attribute. Specifically, the controller A modifies the local attribute, e.g. local preference of the route delivered by Agg-PE1 to 200 and modifies the local attribute, e.g. local preference of the route delivered by Agg-PE2 to 100. The traffic of Acc-PE1 preferentially passes through Agg-PE1 and suboptimally passes through Agg-PE2. In this way, a path is controlled according to nodes and the traffic is scheduled in an optimized way. The A controller may also modify the local attributes of other forwarding devices in the primary forwarding path. The modification includes modification of the value of the local attribute of a BGP neighbor of the forwarding device in the forwarding device. The local attribute can indicate the priority of service forwarding.

### Application example two

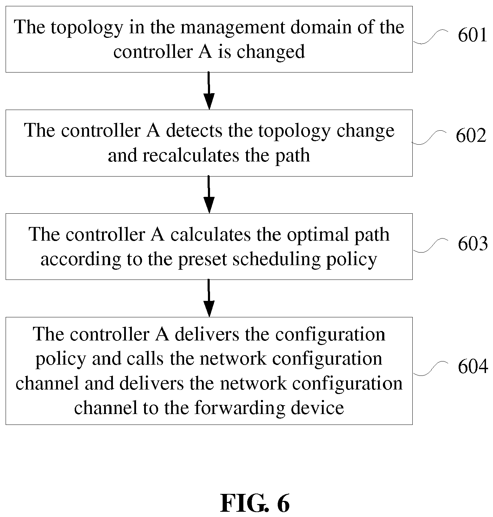

On the basis of application example one, in this application example, that is, a scenario where the topology of an access ring has changed, a traffic scheduling method is described so as to achieve automatic service deployment and traffic adjustment. As shown in FIG. 6, the method in this application example includes the steps 601, 602, 603 and 604.

In step 601, the BGP-LS protocol between the controller A and the forwarding devices senses a topology change, for example, the failure of a link between Acc-PE1 and Agg-PE1, in the management domain of the controller A and sends the latest topology information to the controller A.

In step 602, the controller A monitors the topology change and recalculates reachable paths from the Acc-PE1 device to Agg-PE1 and Agg-PE2 at the domain border. Assuming that all links have the same traffic engineering (TE) metric value, then the value of the lowest IGP cost from Acc-PE1 to Agg-PE1 in the domain is 3 (because the total TE of this path is 1), and the value of the lowest IGP cost from Acc-PE1 to Agg-PE2 in the domain is 2 (because the total TE of this path is 2).

In step 603, according to application example one, a scheduling policy preset by the controller A is that among the paths through which BGP-LSPs pass, the BGP-LSP path with the lowest IGP cost is optimal, so that network traffic is balanced at the forwarding device level.

A route delivered by N-PE3 in the management domain of the controller C passes through the aggregation ring and then enters Agg-PE1 and Agg-PE2 in the access ring. Each of Agg-PE1 and Agg-PE2 establishes a BGP neighbor relation with Acc-PE1. Acc-PE1 can receive the same route from different BGP neighbors Agg-PE1 and Agg-PE2. According to the scheduling policy preset by the controller A, the path with the lowest IGP cost in the domain is an optimal path, the value of the lowest IGP cost from Acc-PE1 to Agg-PE1 in the domain is 3, and the value of the lowest IGP cost from Acc-PE1 to Agg-PE2 in the domain is 2. Therefore, the active path of BGP LSP in the management domain is from Acc-PE1 to Agg-PE1 and that the standby path of BGP LSP in the management domain is from Acc-PE1 to Agg-PE2.

In step 604, the controller A configures a routing policy for the Acc-PE1 device and modifies the local attribute, e.g. local preference, of the same route delivered by different neighbors in the BGP attribute. Specifically, the controller A modifies the local attribute, e.g. local preference, of the route delivered by Agg-PE2 to 200 and modifies the local attribute, e.g. local preference, of the route delivered by Agg-PE1 to 100. The traffic of Acc-PE1 preferentially passes through Agg-PE1 and suboptimally passes through Agg-PE1. The controller A can automatically sense a topology change of a forwarding plane and adjust the scheduling policy without manual modification of configuration to ensure that traffic is forwarded according to the optimal path.

### Application example three

In this application example, the scheduling method provided in the preceding embodiments is used to implement dynamic adjustment so as to achieve automatic service deployment and traffic adjustment in the scenario where the forwarding device Agg-PE1 or Agg-PE2 at the domain border in the access ring as shown in FIG. 4 is powered off and then restarted or is faulty and then restored.

In step 701, Agg-PE1 in the management domain of the controller A is faulty or powered off and then restarted, and the BGP-LS between the controller A and the forwarding devices senses the topology change and sends the latest topology information to the controller A.

In step 702, the controller A monitors the topology change, recalculates reachable paths from the Acc-PE1 device to Agg-PE1 and Agg-PE2 at the domain border, and obtains that the path from Acc-PE1 to Agg-PE1 is unreachable and the path from Acc-PE1 to Agg-PE2 is reachable, and the value of the lowest IGP cost in the domain is 2 (because the total TE of this path is 2).

In step 703, according to application example one, the scheduling policy preset by the controller A is that among the paths through which BGP-LSPs pass, the BGP-LSP path with the lowest IGP cost is optimal, and Acc-PE1 has merely a route delivered by Agg-PE2. According to the scheduling policy preset by the controller A, the path with the lowest IGP cost in the domain is an optimal path, the path from Acc-PE1 to Agg-PE1 is unreachable, the value of the lowest IGP cost from Acc-PE1 to Agg-PE2 in the domain is 2, and the next hop of the traffic is forwarded by Agg-PE2.

In step 704, after the fault of the Agg-PE1 device is removed, the controller A senses that the device is back online, recalculates the reachable paths from the Acc-PE1 device to Agg-PE1 and Agg-PE2 at the domain border, and obtains the scenario as described in application example one according to the scheduling policy preset by the controller A, that is, the BGP-LSP path with the lowest IGP cost is optimal among the paths through which BGP-LSPs pass.

In step 705, the controller A configures a routing policy for the Acc-PE1 device and modifies the local attribute, e.g. local preference, of the same route delivered by different neighbors in the BGP attribute. Specifically, the controller A modifies the local attribute, e.g. local preference, of the route delivered by Agg-PE1 to 200 and modifies the local attribute, e.g. local preference, of the route delivered by Agg-PE2 to 100. The traffic of Acc-PE1 preferentially passes through Agg-PE1 and suboptimally passes through Agg-PE1. The controller A can automatically sense a topology change of a forwarding plane and adjust the scheduling policy without manual modification of configuration to ensure that traffic is forwarded according to the optimal path.

### Application example four

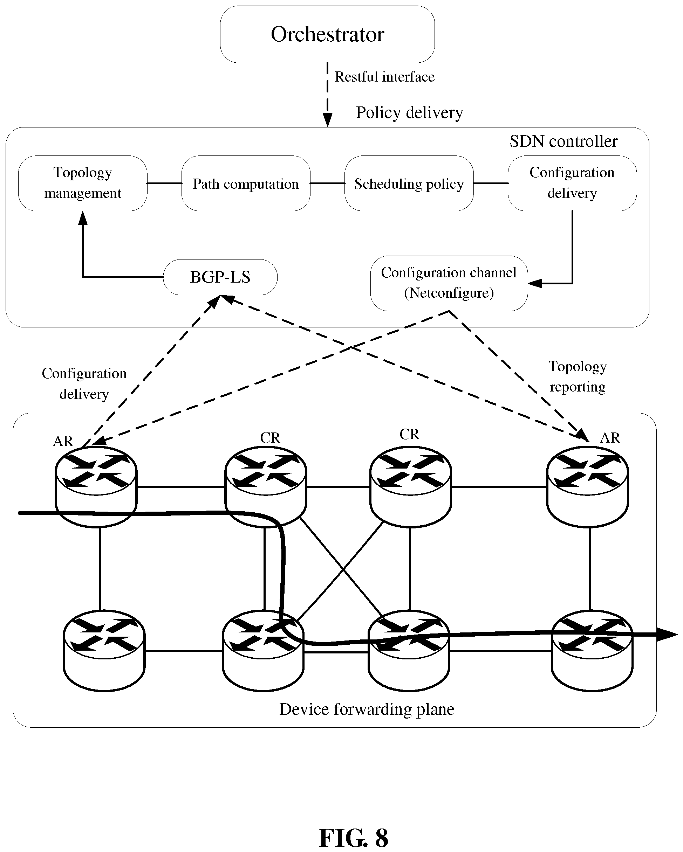

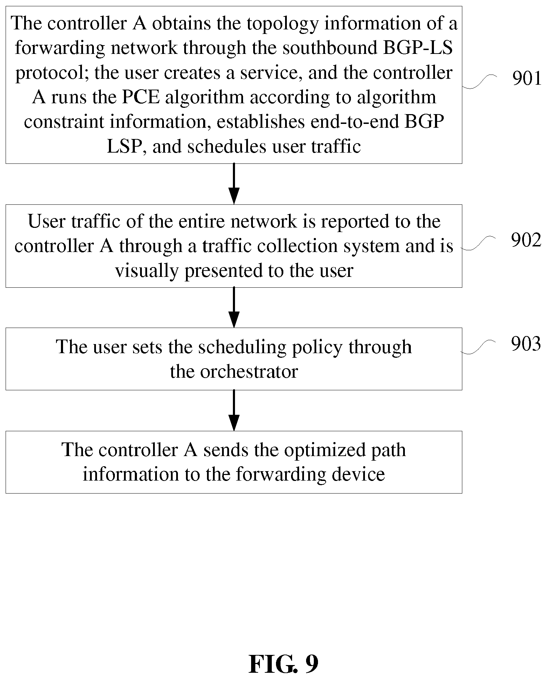

This application example describes a service deployment manner that is different from the service deployment manner provided in the preceding application examples one to three. In this application example, as shown in FIG. 8, according to an external event, a user uses an orchestrator to edit the scheduling policy through a northbound interface of the controller A and configures and delivers a forwarding devices. As shown in FIG. 9, the method includes the steps 901, 902, 903 and 904.

In step 901, the controller A obtains the topology information of a forwarding network through the southbound BGP-LS protocol; the user creates a service, and the controller A runs the Path Computation Element (PCE) algorithm according to algorithm constraint information, establishes end-to-end BGP LSP, and schedules user traffic.

In step 902, user traffic of the entire network is reported to the controller A through an external or built-in traffic collection system and is visually presented to the user.

In step 903, the user configures the scheduling policy through the orchestrator. As shown in FIG. 4, the first policy is that the next hop of traffic from all access devices to other rings preferentially passes through Agg-PE1, the second policy is that, after the traffic collection system detects that the traffic of Agg-PE1 exceeds 80% of the maximum carried traffic, part of the traffic is diverted to Agg-PE2 according to the policy that the BGP-LSP path with the lowest IGP cost is optimal among the paths through which BGP-LSPs pass, so that flexible dynamic adjustment is achieved.

In step 904, the controller A sends the optimized path information to the forwarding devices.

The control method in any of the preceding application examples one to four is also applicable to the aggregation ring and the core ring.

In summary, in this embodiment, the method and system in which the SDN controller flexibly controls the forwarding path of the traffic and schedules the service traffic according to the policy can implement multiple network traffic adjustments including intra-domain path adjustment and inter-domain path adjustment. The complex and variable policy calculation is concentrated in the controller, an underlying distributed control network is retained, multiple protocols and IP forwarding engineering for the network are compatible, and services can be deployed even if the software of the forwarding device is not upgraded. This can reduce the complexity of operator network management, improve the efficiency and flexibility of service deployment, and reduce the workload of network maintenance personnel.

The method for controlling a forwarding path by the preceding control device may be implemented by use of software plus a necessary general-purpose hardware platform, or may be implemented by hardware. The method in the preceding embodiments may be embodied in the form of a computer software product. The computer software product is stored in a storage medium (such as a read-only memory (ROM), a random access memory (RAM), a disk or an optical disk) and includes one or more instructions for making a device (which may be a network device such as an SDN controller) perform the method in the preceding embodiments.

This embodiment provides a computer-readable storage medium configured to store computer-executable instructions for executing the method in any preceding embodiment.

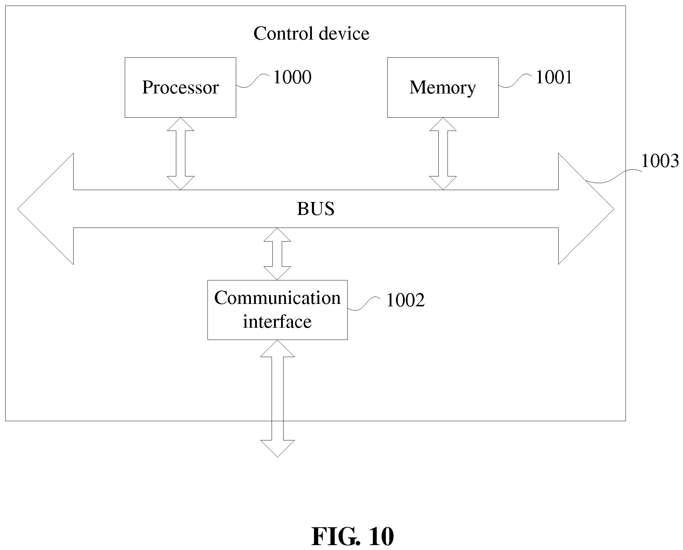

This embodiment provides a structure diagram of hardware of a control device. Referring to FIG. 10, the control device includes:

at least one processor 1000 (FIG. 10 shows one processor 1000 by way of example) and a memory 1001, and may further include a communication interface 1002 and a bus 1003. The processor 1000, the memory 1001 and the communication interface 1002 may communicate with each other through the bus 1003. The processor 1000 may call logic instructions in the memory 1001 to perform the method in the preceding embodiments.

In addition, the logic instructions in the memory 1001 may be implemented in the form of a software function unit and, when sold or used as an independent product, may be stored in a computer-readable storage medium.

As a computer-readable storage medium, the memory 1001 may be used for storing software programs and computer-executable programs, such as program instructions or modules corresponding to the method in any preceding embodiment. The processor 1000 runs the software programs, instructions or modules stored in the memory 1001 to perform function applications and data processing, that is, to implement the method in the preceding embodiments.

The memory 1001 may include a program storage region and a data storage region, where the program storage region may store an operating system and an application program required by at least one function while the data storage region may store data created depending on use of a terminal device. In addition, the memory 1001 may include a high-speed random access memory, and may further include a non-volatile memory.

### INDUSTRIAL APPLICABILITY

A method and apparatus for controlling a forwarding path, and a control device can control the forwarding path of traffic flexibly and schedule service traffic according to a policy.

## Claims

1. A method for controlling a forwarding path, comprising:
determining, by a control device, available forwarding paths in a management domain for a service in the management domain of the control device according to network topology information and path computation constraint information of the service in the management domain, wherein each of the available forwarding paths is formed by forwarding devices for forwarding the service in the management domain;
selecting, by the control device, a primary forwarding path and a standby forwarding path from the available forwarding paths according to a scheduling policy; and
configuring, by the control device, a for the forwarding devices in the management domain according to the primary forwarding path and the standby forwarding path.

2. The method of claim 1, wherein before the determining, by the control device, the available forwarding paths of the service in the management domain, the method further comprises:
collecting, by the control device, the network topology information in the management domain of the control device by using a Border Gateway Protocol with Link State, BGP-LS, wherein the path computation constraint information of the service comprises at least one of: a bandwidth of the service, a delay of the service, forwarding devices through which the service has to pass, and forwarding devices excluded by the service.

3. The method of claim 1, further comprising: receiving, by the control device, the scheduling policy configured on an orchestrator through a northbound interface of the control device.

4. A method of any one of claims 1 to 3, wherein the selecting, by the control device, the primary forwarding path and the standby forwarding path from the available forwarding paths according to the scheduling policy comprises one of the following:
determining the primary forwarding path and the standby forwarding path according to an Interior Gateway Protocol, IGP, cost of a plurality of the available forwarding paths of the service in the management domain;
determining the primary forwarding path and the standby forwarding path according to a delay of the plurality of the available forwarding paths of the service in the management domain; and
in condition that more than two of the available forwarding paths satisfy a delay requirement of the service in the management domain, determining the primary forwarding path and the standby forwarding path according to an IGP cost of the more than two of the available forwarding paths.

5. The method of claim 4, further comprising: switching the primary forwarding path to the standby forwarding path when traffic of any forwarding device in the primary forwarding path exceeds a set traffic threshold.

6. The method of claim 2, wherein the method further comprises: perceiving, by the control device, a change of the network topology information in the management domain of the control device by using the BGP-LS, and updating, by the control device, the network topology information when the network topology information changes; and
wherein the determining, by the control device, the available forwarding paths of the service in the management domain of the control device according to the network topology information and the path computation constraint information of the service in the management domain comprises: redetermining the available forwarding paths of the service in the management domain according to the path computation constraint information and the updated network topology information.

7. The method of claim 1, wherein the configuring, by the control device, the routing policy for the forwarding devices in the management domain according to the primary forwarding path and the standby forwarding path comprises:
configuring, by the control device, a local attribute of forwarding devices in the primary forwarding path and a local attribute of forwarding devices in the standby forwarding path.

8. An apparatus for controlling a forwarding path, comprising:
a path computation module, which is configured to determine available forwarding paths in a management domain for a service in the management domain of the control device according to network topology information and path computation constraint information of the service in the management domain, wherein each of the available forwarding paths is formed by forwarding devices for forwarding the service in the management domain;
a policy scheduling module, which is configured to select a primary forwarding path and a standby forwarding path from the available forwarding paths according to a scheduling policy; and
a configuration delivery module, which is configured to configure a routing policy for the forwarding devices in the management domain according to the primary forwarding path and the standby forwarding path.

9. The apparatus of claim 8, further comprising:
a topology management module, which is configured to collect the network topology information in the management domain of the control device by using a Border Gateway Protocol with Link State, BGP-LS, before the path computation module determines the available forwarding paths of the service in the management domain, wherein the path computation constraint information of the service comprises at least one of: a bandwidth of the service, a delay of the service, forwarding devices through which the service has to pass, and forwarding devices excluded by the service.

10. The apparatus of claim 8, wherein the policy scheduling module is further configured to receive the scheduling policy configured on an orchestrator through a northbound interface of the control device.

11. The apparatus of claim 8, wherein the policy scheduling module is further configured to select the primary forwarding path and the standby forwarding path from the available forwarding paths in one of the following manners:
determining the primary forwarding path and the standby forwarding path according to an Interior Gateway Protocol, IGP, cost of a plurality of the available forwarding paths of the service in the management domain;
determining the primary forwarding path and the standby forwarding path according to a delay of the plurality of the available forwarding paths of the service in the management domain; and
in condition that more than two the available forwarding paths satisfy a delay requirement of the service in the management domain, determining the primary forwarding path and the standby forwarding path according to an IGP cost of the more than two of available forwarding paths.

12. The apparatus of claim 11, wherein the scheduling policy further comprises: switching the primary forwarding path with the standby forwarding path when traffic of any forwarding device in the primary forwarding path exceeds a set traffic threshold.

13. The apparatus of claim 9, wherein the topology management module is further configured to perceive a change of the network topology information in the management domain of the control device by using the BGP-LS, and to update the network topology information when the network topology information changes; and
wherein the path computation module is further configured to redetermine the available forwarding paths of the service in the management domain according to the path computation constraint information and the updated network topology information.

14. The apparatus of claim 8, wherein the configuration delivery module is further configured to:
configure a local attribute of forwarding devices in the primary forwarding path and a local attribute of forwarding devices in the standby forwarding path.

15. A control device, comprising a processor and a memory storing instructions executable by the processor, wherein the processor is configure to, when executing the instructions, implement the following operations:
determining available forwarding paths in a management domain for a service in the management domain of the control device according to network topology information and path computation constraint information of the service in the management domain, wherein each of the available forwarding paths is formed by forwarding devices for forwarding the service in the management domain;
selecting a primary forwarding path and a standby forwarding path from the available forwarding paths according to a scheduling policy; and
configuring a routing policy for the forwarding devices in the management domain according to the primary forwarding path and the standby forwarding path.

16. The control device of claim 15, wherein the processor is further configured to implement the following operation: receiving the scheduling policy configured on an orchestrator through a northbound interface of the control device.

17. The control device of claim 15, wherein the selecting the primary forwarding path and the standby forwarding path from the available forwarding paths according to the scheduling policy comprises one of the following:
determining the primary forwarding path and the standby forwarding path according to an Interior Gateway Protocol, IGP, cost of a plurality of the available forwarding paths of the service in the management domain;
determining the primary forwarding path and the standby forwarding path according to a delay of the plurality of the available forwarding paths of the service in the management domain; and
in condition that more than two the available forwarding paths satisfy a delay requirement of the service in the management domain, determining the primary forwarding path and the standby forwarding path according to an IGP cost of the more than two of the available forwarding paths;
wherein the scheduling policy further comprises: switching the primary forwarding path with the standby forwarding path when traffic of any forwarding device in the primary forwarding path exceeds a set traffic threshold.

18. The control device of claim 15, wherein the configuring the routing policy for the forwarding devices in the management domain according to the primary forwarding path and the standby forwarding path comprises:
configuring a local attribute of forwarding devices in the primary forwarding path and a local attribute of forwarding devices in the standby forwarding path.

19. A computer-readable storage medium, which is configured to store computer-executable instructions for executing the method of any one of claims 1 to 7.
